Europäisches Patentamt

European Patent Office

Office européen des brevets

(11) Publication number: **0 444 387 A1**

# EUROPEAN PATENT APPLICATION

(21) Application number: **90830595.6**

(22) Date of filing: **18.12.90**

(51) Int. Cl.⁵: **F04B 9/02**, F04B 17/00,
F04B 9/14, F16D 11/00,
G05G 11/00

(30) Priority: **28.02.90 IT 5289790 U**

(43) Date of publication of application:
**04.09.91 Bulletin 91/36**

(84) Designated Contracting States:
**DE ES FR GB IT NL SE**

(71) Applicant: **IVECO FIAT S.p.A.**
**Via Puglia 35**
**I-10156 Torino(IT)**

(72) Inventor: **Gheddo, Carlo**
**Via Romita 3/b**
**I-10137 Torino(IT)**

(74) Representative: **Buzzi, Franco et al**
**c/o Jacobacci-Casetta & Perani S.p.A. Via**
**Alfieri, 17**
**I-10121 Torino(IT)**

(54) **A device for the electrical or manual operation of hydraulic actuators.**

(57) A reciprocating, positive-displacement hydraulic pump for operating hydraulic actuators in a commercial vehicle includes a device (24,48,52) for disengaging the electric driving motor from the shaft (18) of the pump. In the disengaged configuration, the shaft is rotated by means of a crank (26).

FIG. 3

The present invention relates to a device for operating hydraulic actuators, particularly for commercial vehicles, of the type comprising a hydraulic pump driven by an electric motor by means of a drive shaft and connected to the actuators by means of a hydraulic circuit.

The hydraulic actuators of a commercial vehicle, for example, the double-acting cylinder for tilting the cab and the actuators for lifting the third axle or for moving the spare wheel, are normally operated by hydraulic pumps driven by electric motors. In order to enable the pumps also to operate in the event of damage to the electrical system of the vehicle, hand-operated hydraulic pumps, normally of the reciprocating, positive-displacement type, are associated with the electrical hydraulic pumps. Although the electrical pump and the hand pump are combined in a single body, this current embodiment is penalised by a heavy weight, a high cost and the fact that the hand-operated hydraulic pump, which is normally not used for long periods, may be found to be jammed when its operation is required.

The object of the present invention is to provide a device for operating hydraulic actuators, of the type specified at the beginning of the description, which does not have the aforesaid disadvantages and which is simple and cheap to produce.

According to the invention, this object is achieved by virtue of the fact the device includes manual operating means for rotating the shaft of the pump, disengagement means being interposed between the pump and the electric motor for disengaging the shaft from the motor for rotation during the manual operation of the device.

By virtue of these characteristics, a single hydraulic pump can be used, for example, of the type with pistons driven by cams and tappets with one or more pumping elements which are in line or paired and function when the pump is operated electrically and when it is operated manually, the disengagement means enabling manual operation which would otherwise be impossible because of the high reduction ratio between the electric motor and the shaft of the hydraulic pump.

Further advantages and characteristics of the device according to the invention will become clear from the detailed description which follows, provided purely by way of non-limiting example, with reference to the appended drawings, in which:

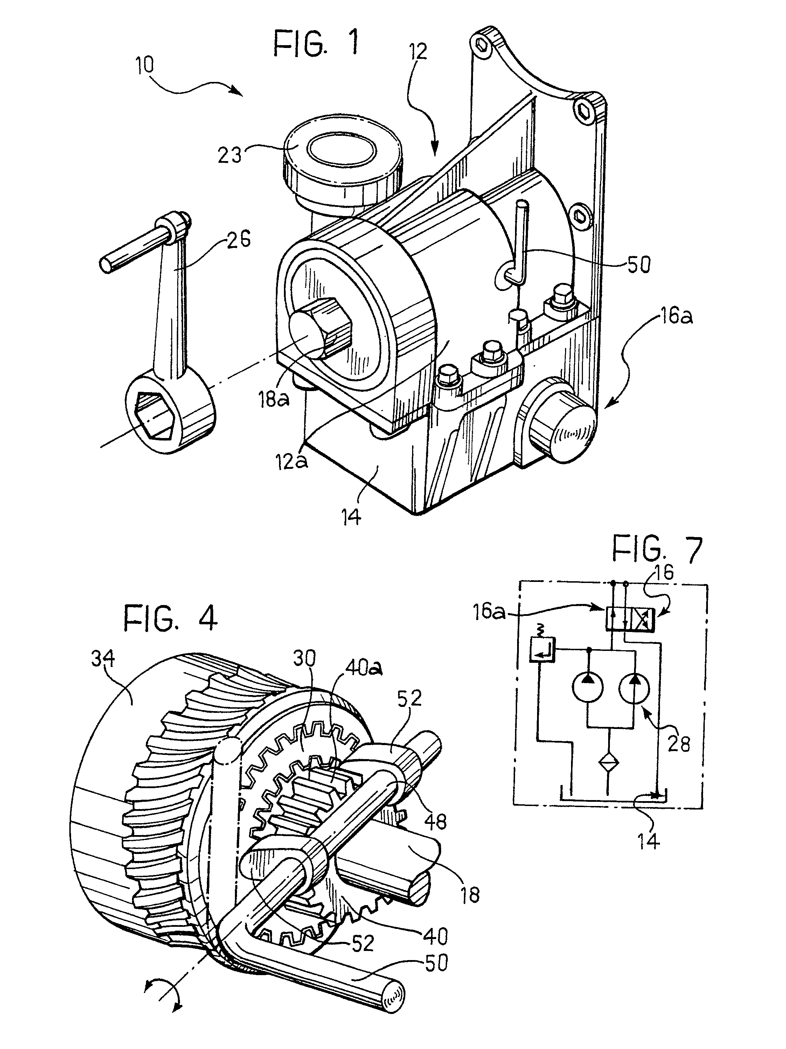

Figure 1 is a schematic perspective view of a device according to the invention,

Figure 2 is a longitudinal sectional view of Figure 1 and shows the electrically-operated configuration of the hydraulic pump,

Figure 3 is a view similar to Figure 2 and shows a hand-operated configuration of the pump,

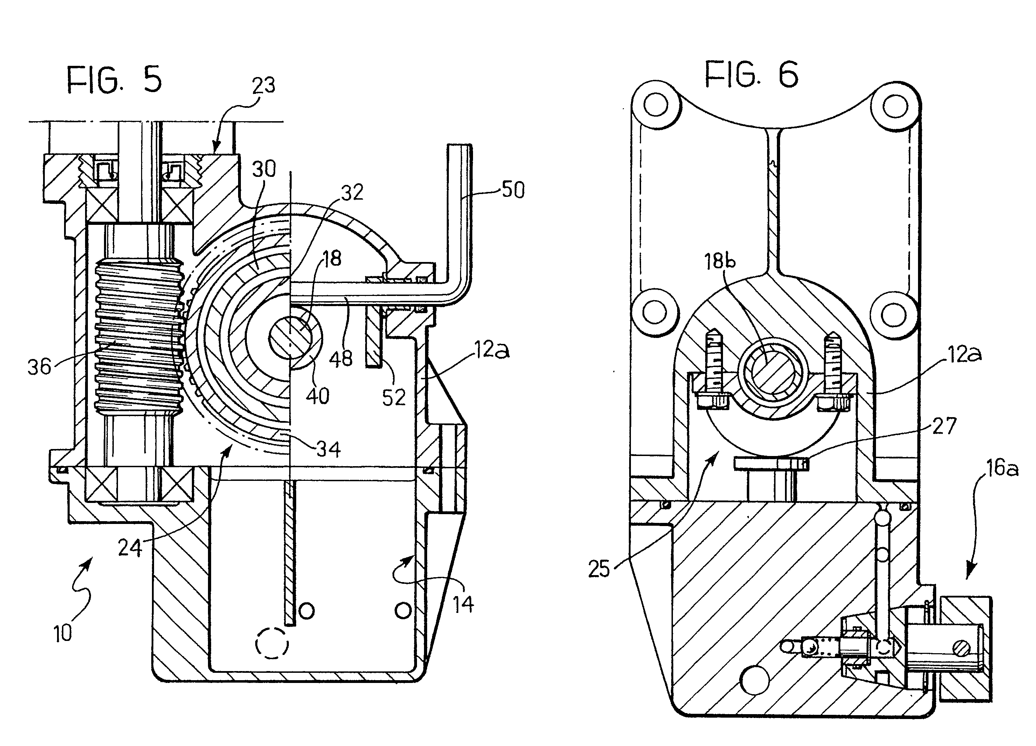

Figure 4 is a perspective view of a detail of Figure 3,

Figure 5 is a cross-section taken on the line V-V of Figure 2,

Figure 6 is a cross-section taken on the line VI-VI of Figure 2, and

Figure 7 is a diagram of the hydraulic circuit of the device.

With reference to the drawings, a device, generally indicated 10, for operating hydraulic actuators comprises a hydraulic pump 12, a reservoir 14 for the hydraulic fluid, and a hydraulic circuit 16 (Figure 7).

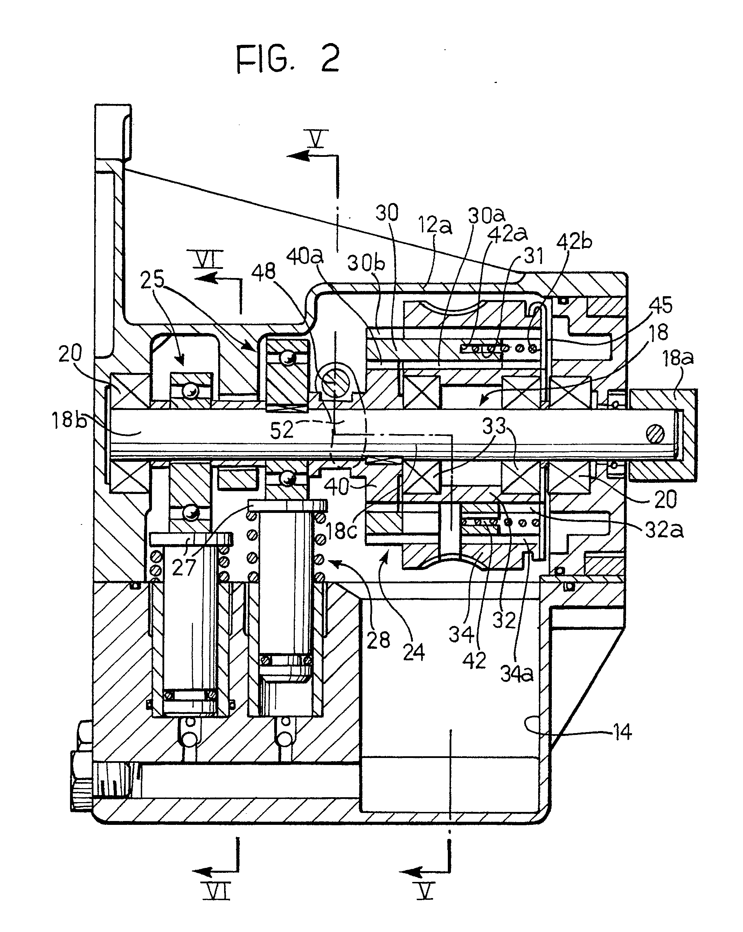

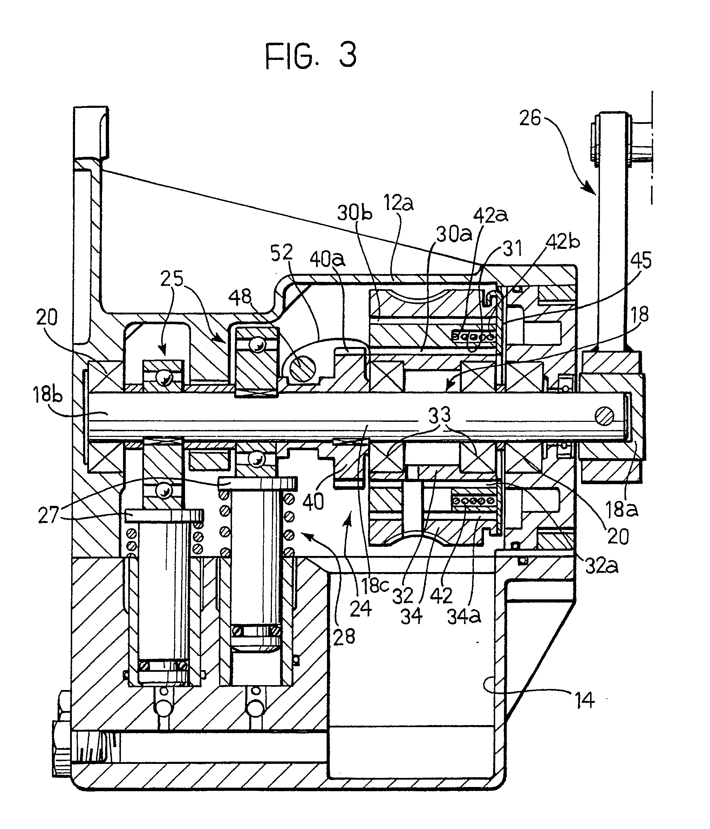

The hydraulic pump 12 has a hollow support structure 12a within which a drive shaft 18 is mounted rotatably with the interposition of rolling bearings 20. The drive shaft 18 is rotated, in the configuration shown in Figure 2, by an electric motor (not shown) through a clutch unit, generally indicated 24. The electric motor is mounted on a flange 23 of the support structure 12a. In the configuration shown in Figure 3, the shaft 18 is rotated by a crank 26 keyed to a first end 18a of the shaft 18, outside the hollow structure 12a.

Two cams 25 are mounted rotatably on a second end portion 18b of the shaft 18 for cooperating with tappets 27 of a hydraulic pump body 28 of a known type with pistons. The appended drawings show the version with two pumping elements; however, solutions with one or more in-line or paired pumping elements may be used.

The clutch unit 24 is arranged in correspondence with a central portion 18c of the shaft 18 and has a sliding sleeve 30 coaxial with the shaft 18 and having respective internal splines 30a and external splines 30b. The sleeve 30 is mounted for sliding on a bush 32 which is rotatable on the shaft 18 with the interposition of rolling bearings 33 and has external axial splines 32a complementary to the internal axial splines 30a of the sleeve 30. A ring gear 34 mounted coaxially with and externally of the sliding sleeve 30 and meshing with a worm screw 36 driven by the electric motor has internal axial splines 34a complementary to the external axial splines 30b of the sliding sleeve 30. A gear 40 with external teeth 40a corresponding to the internal axial splines 30a of the sliding sleeve 30 is keyed to the shaft 18 and faces the bush 32 which is rotatable on the shaft 18.

The sliding sleeve 30 has an annular seat 31 in its end face for housing the end 42a of a helical spring 42 a second end 42b of which abuts an annular abutment element 45 fixed to the face of the ring gear 34.

A rod 48 to which two eccentrics 52 are keyed is mounted rotatably in correspondence with a wall of the hollow structure 12a and has a bent L-shaped end 50 for manual operation outside the hollow structure 12a.

In the configuration shown in Figure 2, the eccentrics 52 are disengaged from a corresponding end surface 30d of the sliding sleeve 30. In this configuration, the electric motor rotates the ring gear 34 through the worm screw 36 and, with the interposition of the sleeve 30, the ring gear 34 rotates the gear 40 which is keyed to the shaft 18 of the hydraulic pump 28.

In the event of damage to the electrical system of the vehicle (for example, if the battery is flat) the operator moves the operating lever 50 so as to shift the sliding sleeve 30 axially by means of the eccentric 52, against the action of the helical spring 42 (the configuration shown in Figure 3). This shift causes the splined internal surface 30a of the sleeve 30 to be disengaged from the toothed surface 40a of the gear 40. The operator can therefore operate the hydraulic pump 28 manually by means of the crank 26 keyed to the end 18a of the shaft 18, which would be impossible in the configuration shown in Figure 2 because of the kinematic connection between the shaft 28 and the worm screw 36, given the high reduction ratio between the screw and the ring gear 34.

To advantage, the operating device 10 may be associated with a double-acting hydraulic cylinder for tilting the cab of a commercial vehicle. For this purpose, the hydraulic circuit 16 of the device includes a hand-operated valve 16a for pressurising or depressurising the portions of the double-acting cylinder used for tilting the cab.

As well as the advantages of small bulk and low weight and cost, the device according to the invention is particularly suitable for a modular embodiment, in which a single hydraulic pump 12, as described, operates several distributors, each associated with a respective hydraulic actuator. In this case, instead of the valve 16a, several distributors, perhaps electrically-operated, may be mounted outside the unit, there being present the same disengagement unit 24 as that described above and the same portion 18a of the shaft 18 outside the hollow support structure 12a for the keying of a hand-operated emergency crank.

## Claims

1. A device for operating hydraulic actuators, particularly for commercial vehicles, of the type comprising a hydraulic pump driven by a motor by means of a drive shaft and connected to the actuators by means of a hydraulic circuit, characterised in that it also includes manual operating means (26, 18a) for rotating the shaft (18), disengagement means (24, 48, 52) being interposed between the latter and the motor for disengaging the shaft (18) from the motor for rotation during the maual operation of the device (10).

2. A device according to Claim 1, in which the operating shaft is mounted rotatably in a hollow support structure with the interposition of rolling bearings, characterised in that it includes:
   - an externally-splined sleeve (30) slidable axially on a first portion (18c) of the operating shaft (18) between a first position and a second position,
   - an internally-splined ring gear (34) coaxial and coupled for rotation with the splined sleeve (30) and adapted to be rotated by the motor,
   - a gear (40) keyed to the drive shaft (18) adjacent the sleeve (30),
   - resilient means (42) interposed between the ring gear (34) and the sleeve (30) for urging the sleeve towards the first position in which a portion (30a) of the sleeve (30) is meshed with the gear (40, 40a) to rotate the shaft (18), and
   - manually-operated means (50, 48, 52) adapted to slide the sleeve (30), against the action of the resilient means (42), towards its second position in which it is disengaged from the gear (40), enabling the drive shaft (18) to be disconnected from the ring gear (34) for rotation.

3. A device according to Claim 2, characterised in that it has an externally-splined auxiliary sleeve (32) which is mounted for rotation on the first portion (18c) of the shaft (18) with the interposition of rolling bearings (33) and on which the sleeve (30), which also has internal axial splines (30a) complementary to the external splined surface of the auxiliary sleeve (32), can slide.

4. A device according to Claim 2 or Claim 3, characterised in that the resilient means comprise a helical compression spring (42) having a first end (42a) inserted in an annular cavity (31) in the end face of the sleeve (30) and a second end (42b) abutting an annular abutment element (45) fixed to the end face of the ring gear (34).

## FIG. 1

10
12
23
26
50
16a
18a
12a
14

## FIG. 4

34
30
40a
52
48
18
40
52
50

## FIG. 7

16
16a
28
14

EP 0 444 387 A1

# FIG. 2

5

# FIG. 3

FIG. 5

FIG. 6

EP 0 444 387 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-1 038 145  (GONTHIER)<br>* page 1, line 1 - page 2, left-hand column, paragraph 2; figures 1, 2 *<br>– – – | 1 | F 04 B 9/02<br>F 04 B 17/00<br>F 04 B 9/14<br>F 16 D 11/00<br>G 05 G 11/00 |
| Y | DE-A-2 758 745  (WAGNER)<br>* page 3, line 1 - page 7, paragraph 3; figure 1 *<br>– – – | 1 | |
| A | GB-A-1 523 402  (FAIREY WINCHES LTD)<br>* page 2, line 85 - page 4, line 3; figures 1-6 *<br>– – – | 2 | |
| A | DE-A-2 521 408  (STEVEN)<br>* page 2, paragraph 5 - page 5, paragraph 2; figure 1 *<br>– – – | 2 | |
| A | GB-A-1 193 35  (GRAHAM)<br>* page 4, line 11 - page 5, line 22; figures 1-3 *<br>– – – | 1,2 | |
| A | DE-U-8 905 880  (SÜDDEUTSCHE KÜHLERFABRIK JULIUS & CO KG)<br>* page 5, paragraph 3 - page 7, paragraph 3; figure 1 *<br>– – – | 1,2 | |
| A | GB-A-2 132 304  (MANSERVISI & CORTICELLI)<br>* page 1, line 120 - page 3, line 12; figures 1-4 *<br>– – – – – | 2 | TECHNICAL FIELDS SEARCHED (Int. Cl.5)<br><br>F 04 B<br>F 16 D<br>G 05 G<br>B 60 S |

The present search report has been drawn up for all claims

| Place of search | Date of completion of search | Examiner |
|---|---|---|
| The Hague | 04 March 91 | VON ARX H.P. |